# EUROPEAN PATENT APPLICATION

(11) **EP 1 316 473 A2**
(43) Date of publication of application: **04.06.2003**
(21) Application number: 02102645.5
(22) Date of filing: 26.11.2002
(51) Int. Cl.: B60N 3/10, B60N 2/46

(54) **An Interior System for a Motor Vehicle**

(30) Priority: 28.11.2001 US 319013
(71) Applicant: Ford Global Technologies, Inc., Dearborn, Michigan 48126 (US)
(72) Inventor: Wikman, Hans, 436 39, Askim (SE); Kullman, Leo, 565 91, Mullsjö (SE); Liedberg, Lennart, 416 70, Göteborg (SE); Forsgren, Tord, 426 54, Västra Frölunda (SE)
(74) Representative: Messulam, Alec Moses

(57) **Abstract**

An interior system for a motor vehicle comprises two front seats (12,14) and a centre rear seat (18) disposed rearwardly of the front seats (12,14) and adjustable through a range of positions including forward and rearward positions. The system also includes a first console (30) disposed between the two front seats (12,14) having a substantially flat portion (38) located lower than the centre rear seat (18) and in general lateral alignment with the centre rear seat (18). The flat portion (38) is located proximate the centre rear seat (18) when the centre rear seat (18) is in its forward position and can be used as a footrest by a person occupying the centre rear seat (18).

The first console (30) further comprises attachment means (52) for attaching a second console (50) to the first console (30) upon the substantially flat portion (38).

## Description

The present invention relates to interior systems for motor vehicles.

In a motor vehicle, comfort and convenience for all people in the vehicle are important. Part of "comfort and convenience" for small children includes the ability to be near their parents. However, for small children seated in the second row of seats in the vehicle, they have not heretofore been able to sit near their parents if their parents are in the front row of seats. Thus, a solution to this issue would improve the comfort and convenience aspects of family travel in a motor vehicle. At the same time, to the extent that the solution to this issue "sub-optimizes" the interior packaging of the vehicle for families without small children, the solution should also be flexible enough to meet the needs of such other families.

It is an object of the present invention to provide an improved interior system for a motor vehicle.

According to a first aspect of the invention there is provided an interior system for a motor vehicle, said motor vehicle defining a forward and a rearward longitudinal direction and having an electrical power supply, two front seats, a rear seat disposed rearwardly of said front seats, the rear seat being adjustable through a range of positions including a forward position and a rearward position characterised in that the system comprises a first console disposed between the two front seats having a substantially flat portion located lower than the rear seat and in general lateral alignment with said rear seat wherein the flat portion is located proximate the rear seat when said rear seat is in the forward position and that a second console is removably attachable at least in part upon the substantially flat portion of the first console.

The substantially flat portion may be padded or may be covered with carpeting.

The first console may include attachment means used to attach the second console thereto.

The attachment means may be moveable detents.

The second console may be removably attached to the attachment means by means of fixing means fixed to the second console.

The fixing means may be inwardly extending tongues.

The first console may further include a first electrical power outlet for selectable connection of an electrical device to the electrical supply of the motor vehicle.

The second console may include a second electrical power output and means to electrically connect the second power outlet to the first power outlet when the second console is fitted to the first console.

The means used to electrically connect the second electrical power outlet to the first power output may include a plug. The plug may extend from a lower side of the second console.

When the second console is removed from the first console the substantially flat portion may be used as a footrest by a person occupying the rear seat.

The rear seat may be a centre rear seat located in a row of seats located rearward of said two front seats and is located in substantial lateral alignment with the first console wherein the centre rear seat is forwardly and rearwardly adjustable independently of the positions of the remainder of the seats in said row of seats.

The first console may include an access door for access to at least one interior convenience feature of the vehicle.

The interior convenience feature may be a cup holder or coin holder.

The second console may include at least one cup holder.

The second console may include an armrest.

According to a second aspect of the invention there is provided a motor vehicle defining a forward and a rearward longitudinal direction and having an electrical power supply, two front seats, a rear seat disposed rearwardly of said front seats which is adjustable through a range of positions including a forward position and a rearward position characterised in that the motor vehicle includes an interior system having first and second consoles in accordance with said first aspect of the invention.

The rear seat may be a centre rear seat located in a row of seats located rearward of said two front seats and is located in substantial lateral alignment with said first console wherein the centre rear seat is forwardly and rearwardly adjustable independently of the positions of the remainder of the seats in said row of seats.

The second console may include an armrest which, when the second console is attached to the first console, is disposed between the front seats.

The invention will now be described by way of example with reference to the accompanying drawing of which:-
Figure 1 illustrates part of the interior of a motor vehicle with centre-second row seat 18 in the rearmost position and console 50 in place;
Figure 2 illustrates part of the interior of the motor vehicle with centre-second row seat 18 in the forward most position and console 50 removed;
Figure 3 is a view between the front seats of the vehicle with console 50 removed;

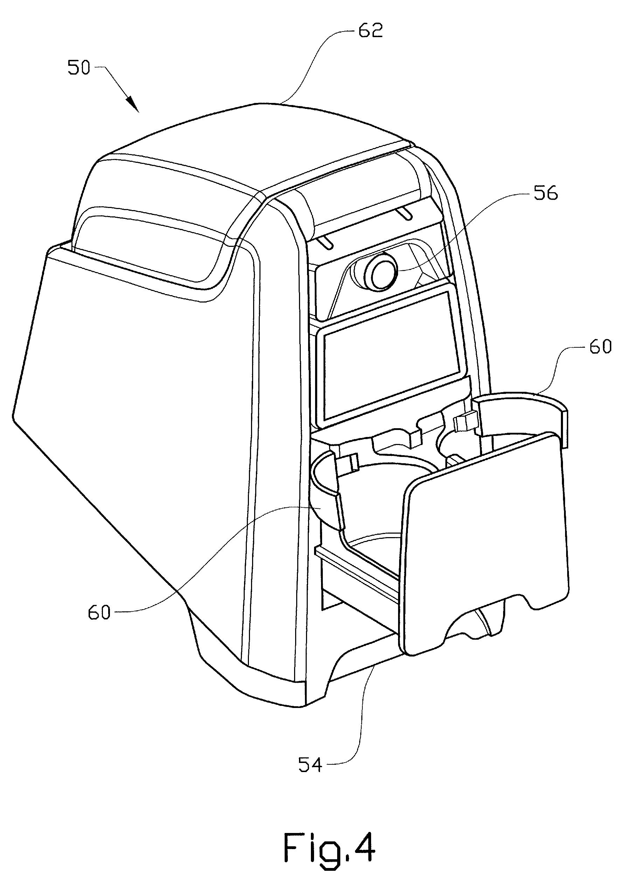

Figure 4 is a perspective view of console 50; and

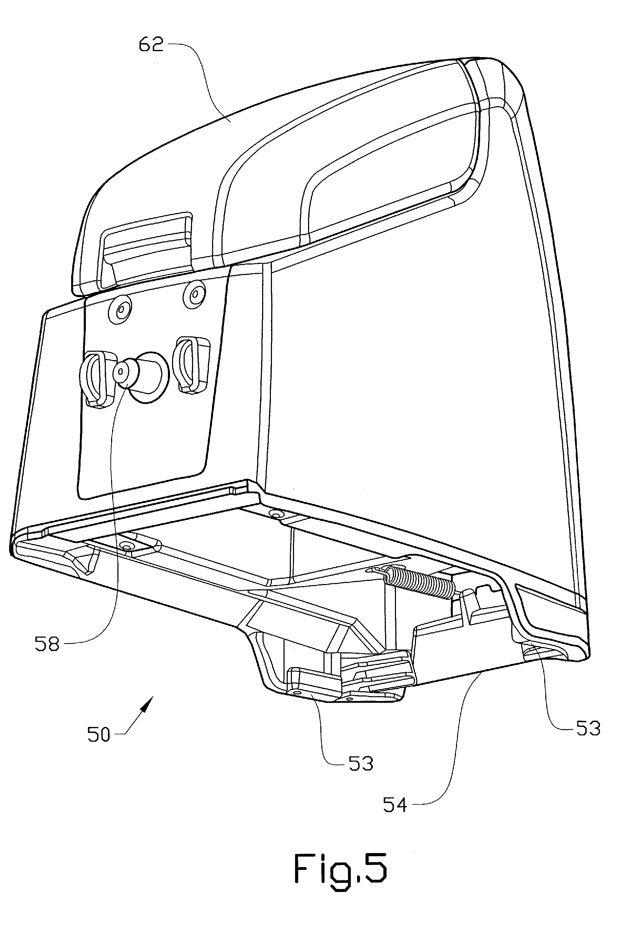

Figure 5 is another perspective view of console 50.

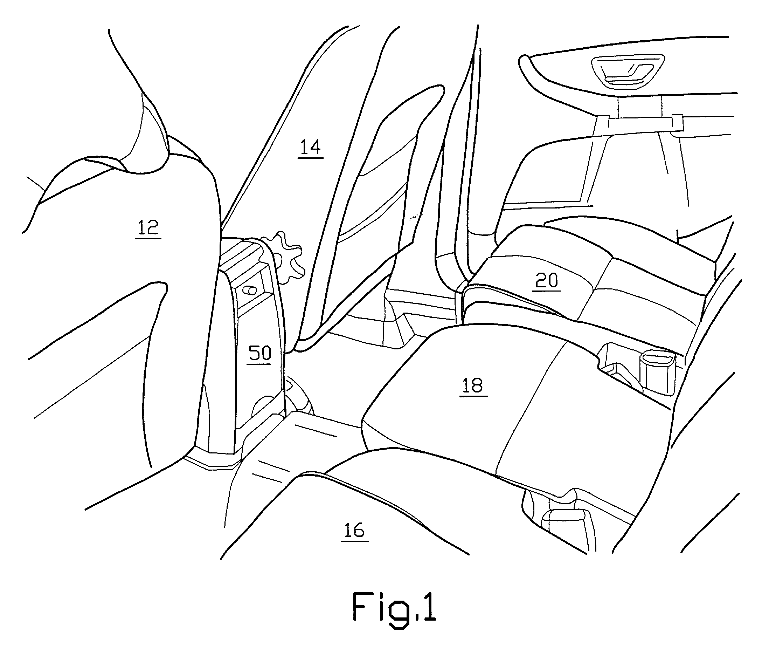

Referring first to Figure 1, the interior of a motor vehicle such as a car or sport-utility vehicle includes front seats 12, 14 arranged in a first row in the vehicle and includes second row seats 16, 18 and 20 arranged in a second row in the vehicle located behind the first row. Further rows of seats can be located behind the second row, depending upon the exact seating configuration in the vehicle. A second console 50 is mounted between the front seats 12, 14.

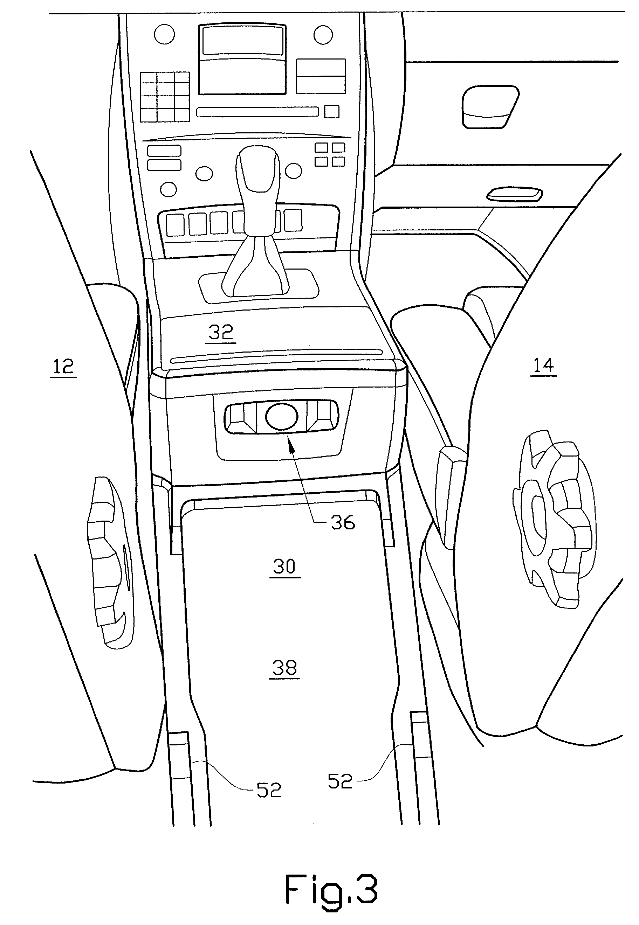

Referring now additionally to Figure 3 a first or base console 30 is mounted between front seats 12, 14. The first console 30 is fixedly attached to the vehicle such as with screws or other attachment means which are not intended to be removed by the owner of the vehicle, except perhaps during repair of the interior of the vehicle.

The first console 30 includes comfort and convenience items which would be included in a typical motor vehicle console, including an access door 32 to access interior conveniences of the vehicle such as one or more cup holders, coin holders, ashtrays and the like, and a 12-volt electrical power outlet 36.

The electrical power outlet 36 is adapted for selectable connection and disconnection of any of a number of electrical devices or appliances, such as audio devices, televisions, coffee cup heaters, and others.

Also included at the rear of first console 30 is a flat footrest portion 38, which is preferably covered with carpeting, other textile material, padding or other material which makes footrest portion 38 comfortable on which to place a person's feet.

With first console 30 mounted in place in the vehicle, the footrest portion 38 is located at a level lower than centre rear seat 18, as would be expected for footrest portion 38 to be effective as a footrest for a person and especially a child sitting in centre rear seat 18.

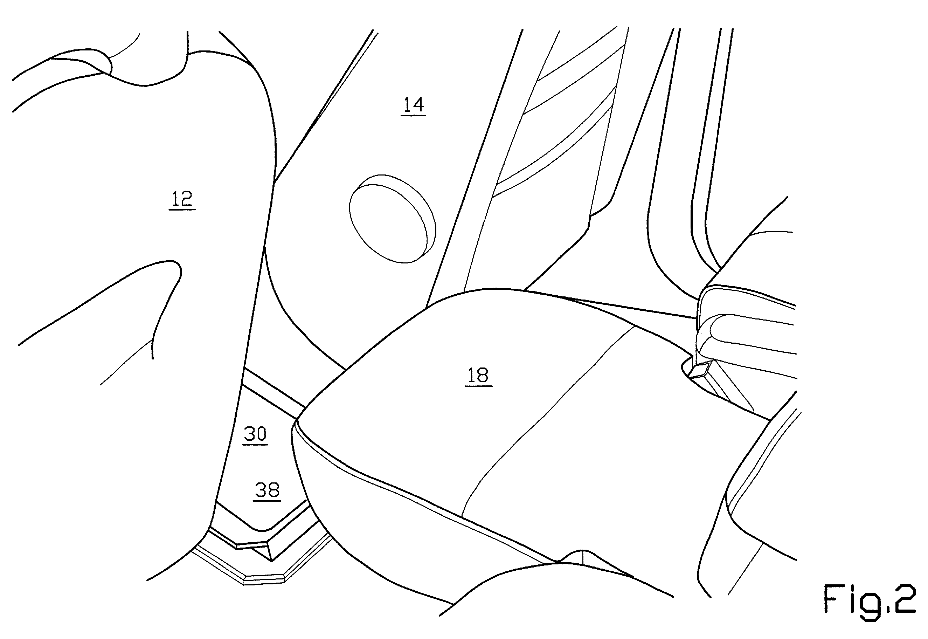

Referring now additionally to Figure 2 it can be seen that the centre rear seat 18 is adjustable forward and rearward, so that a person sitting in centre rear seat 18 can have centre rear seat 18 adjusted forward to allow the person's feet to rest upon footrest portion 38.

In a preferred embodiment the centre rear seat 18 is adjustable forward and rearward independently of the forward/rearward position of the other rear seats 16, 20. This allows the person using footrest portion 38 to have their seat adjusted sufficiently far forward to use footrest portion 38 without requiring similar forward positions for seats 16, 20.

It is desirable for the centre rear seat 18 to have an integrated child seat, as is provided in several vehicle models in the motor vehicle market.

If the person using the centre rear seat 18 does not wish to use the footrest portion 38 then the second console 50 can remain in the vehicle. The centre console 50 is removably attached to the first console 30 substantially above the footrest portion 38. Moveable latching detents 52 on the first console 30 cooperate with inwardly extending tongues 53 formed on the underside of the second console 50 in order for second console 50 to be attached to first console 30.

A spring-loaded handle 54 on the lower portion of the rear of second console 50 is used to release tongues 53 on second console 50 when removal of second console 50 from first console 30 is desired. Of course, any other suitable readily-removable way to affix second console 50 to first console 30 can be used without departing from the scope of the present invention.

Second console 50 includes a 12-volt power outlet 56 preferably on its rear surface. Electrical power for the power outlet 56 is provided through coupling of plug 58 on the lower or underside of the second console 50 into power outlet 36 of first console 30 when second console 50 is attached to first console 30. It should be noted that the plug 58 is formed as part of the second console 50 and enables automatic coupling of the power outlet 56 to the power outlet 36 on the first console 30 whenever the second console 50 is in place.

Suitable conductors (not shown) within the second console 50 electrically couple the plug 58 to the power outlet 56.

The second console 50 includes cup holders 60 and an armrest 62. Beneath the armrest 62 is a storage compartment within second console 50.

It will be appreciated by those skilled in the art that the embodiment disclosed herein is provided by way of example and that alternative or modified embodiments could be constructed without departing from the scope of the invention.

## Claims

1. An interior system for a motor vehicle, said motor vehicle defining a forward and a rearward longitudinal direction and having an electrical power supply, two front seats (12, 14), a rear seat (18) disposed rearwardly of said front seats (12, 14), the rear seat (18) being adjustable through a range of positions including a forward position and a rearward position **characterised in that** the system comprises a first console (30) disposed between the two front seats (12, 14) having a substantially flat portion (38) located lower than the rear seat (18) and in general lateral alignment with said rear seat (18) wherein the flat portion (38) is located proximate the rear seat (18) when said rear seat (18) is in the forward position and that a second console (50) is removably attachable at least in part upon the substantially flat portion (38) of the first console (30).

2. An interior system as claimed in claim 1 in which the first console (30) includes attachment means (52) used to attach the second console (50) thereto.

3. An interior system as claimed in claim 2 in which the second console (50) is removably attached to the attachment means (52) by means of fixing means (53) fixed to the second console (50).

4. An interior system as claimed in any of claims 1 to 3 wherein the first console (30) further includes a first electrical power outlet (36) for selectable connection of an electrical device to the electrical supply of the motor vehicle.

5. An interior system as claimed in claim 4, wherein the second console (50) includes a second electrical power outlet (56) and means (58) to electrically connect the second power outlet (56) to the first power outlet (36) when the second console (50) is fitted to the first console (30).

6. An interior system as claimed in any of claims 1 to 5 in which, when the second console (50) is removed from the first console (30), the substantially flat portion (38) can be used as a footrest by a person occupying the rear seat (18).

7. An interior system as claimed in any of claims 1 to 6 wherein the rear seat is a centre rear seat (18) located in a row of seats (16, 18, 20) located rearward of said two front seats (12, 14) and is located in substantial lateral alignment with said first console (30) wherein the centre rear seat (18) is forwardly and rearwardly adjustable independently of the positions of the remainder of the seats (16, 20) in said row of seats (16, 18, 20).

8. An interior system as claimed in any of claims 1 to 7 wherein the first console (30) includes an access door (32) for access to at least one interior convenience feature of the vehicle.

9. A motor vehicle defining a forward and a rearward longitudinal direction and having an electrical power supply, two front seats (12, 14), a rear seat (18) disposed rearwardly of said front seats (12, 14) which is adjustable through a range of positions including a forward position and a rearward position **characterised in that** the motor vehicle includes an interior system including first and second consoles (30 and 50) as claimed in any of claims 1 to 8.

10. A motor vehicle as claimed in claim 9 wherein the second console (50) includes an armrest (62) which, when the second console (50) is attached to the first console (30), is disposed between the front seats (12, 14).
